# EUROPEAN PATENT APPLICATION

(11) **EP 0 928 561 A1**
(43) Date of publication of application: **14.07.1999**
(21) Application number: 99300064.5
(22) Date of filing: 06.01.1999
(51) Int. Cl.: A23F 5/14, A23F 5/40

(54) **Improved coffee composition**

(30) Priority: 07.01.1998 GB 9800296
(71) Applicant: Slotz Group Ltd., Leeds LS11 5JJ (GB)
(72) Inventor: Gilbert, Colin Manus, Leeds LS19 6AY (GB)
(74) Representative: Crump, Julian Richard John

(57) **Abstract**

A coffee composition comprising particles of ground coffee beans, which particles have a size distribution as follows:-

| | |
|---|---|
| Less than 16 microns | 50-70% by weight |
| 16-46 microns | 30-50% by weight |
| 46-100 microns | less than 10% by weight. |

Said coffee composition may further comprise instant coffee powder.

Preferably, the composition comprises 10-20% parts by weight of ground coffee beans, and 50-70 parts instant coffee.

## Description

The present invention relates to an improved coffee composition, and has particular reference to a coffee composition for use in a vending or free-vending machine.

The traditional method of making coffee comprises grinding, roasted coffee beans to form particles of ground, real coffee. The ground coffee is then infused with hot or boiling water to form a beverage. Typically, the ground coffee is infused in a coffee pot, and before use the ground coffee particles must be separated from the beverage. On grinding the roasted coffee beans, therefore, there is a requirement to ensure that the particle size of the resultant ground coffee is sufficiently large to allow separation of the grounds from the beverage, usually by filtration.

As an alternative to real coffee, an instant coffee composition comprises soluble solids of pure coffee in powder form. Instant coffee has the advantage that on adding hot water to the instant coffee powder, substantially all of the coffee solids dissolve in the hot water, and the beverage is ready for drinking almost immediately. As is well known, the flavour of an instant coffee drink is not quite the same as that of real coffee, and there is generally a preference amongst consumers for the latter.

In the beverage dispensing art, there is a requirement to produce beverages as quickly as possible. Furthermore, there is requirement that the taste of beverages formed in vending or free-vending machines should resemble as closely as possible the taste of the same beverage as made at home or by using traditional brewing methods. It is known to use both real, ground coffee and instant coffee compositions in beverage dispensing machines. Whilst instant coffee compositions satisfy the requirement for a beverage to be formed and delivered quickly to a customer, the disadvantage of the inferior taste as compared with real coffee remains. The disadvantage of using real coffee in vending machines is that the infusion process takes a relatively long time (of the order of a few minutes) and this is generally unacceptable in the beverage dispensing art. Additionally, the use of a real, ground coffee composition usually requires the use of an in-machine infusion chamber, and for reasons of hygiene it is necessary to ensure that the infusion chamber is regularly and scrupulously cleaned. This represents a substantial chore, being time-consuming and labour intensive.

GB-A-2234151 relates generally to novel beverage forming compositions, but specifically discloses a tea composition. GB-A-2234151 further discloses a water tank assembly for producing partially de-aerated, hot water for use in beverage dispensing machines. It has been found that use of the water tank of GB-A-2234151 for making tea from a composition comprising leaf tea is particularly advantageous, because it reduces the proportion of leaf tea particles which float to the surface of the tea drink.

It is an object of the present invention to provide a new coffee composition, especially a coffee composition for use in vending or free-vending machines.

Another object of the present invention is to provide a coffee composition that can be used to form a coffee drink having a taste that resembles coffee made by traditional techniques.

A further object of the invention is to provide a coffee composition that can be used to form a coffee drink substantially instantaneously.

According to one aspect of the present invention therefore there is provided a coffee composition comprising particles of ground coffee beans, which particles have a size distribution as follows:-

| | |
|---|---|
| less than 16µ | 50 to 70% |
| 16 to 46µ | 30 to 50% |
| 46 to 100µ | less than 10%. |

On addition of de-aerated water at a temperature of 60 to 90°C, it is found that less than about 1% of the ground coffee particles are retained on the surface of the beverage. Preferably de-aerated water from a water tank of the kind disclosed by GB-A-2234151 will be used.

Said beverage forming composition may further comprise soluble solids of pure coffee in powder form. Said powder may have a particle size such that 10 to 25% by weight is retained on a 500µ mesh sieve, 25 to 35% by weight is retained on a 355µ mesh sieve, 20 to 30% by weight is retained on a 250µ mesh sieve, 15 to 25% by weight is retained on a 125µ mesh sieve, 5 to 10% by weight is retained on a 63µ mesh sieve, and less than 5% of the powder passes through a 63µ sieve.

The beverage forming composition of the present invention may thus comprise a mixture of instant coffee powder and particles of ground coffee. In some embodiments, the composition may comprise 10 to 20 parts by weight of ground coffee beans, and 50 to 70 parts instant coffee. It will be appreciated by those skilled in the art that the instant coffee powder is used to ensure that a coffee drink made from the composition of the present invention is ready for drinking almost instantaneously, whilst the inclusion of the ground coffee will impart a "real" coffee flavour to the drink.

In some embodiments, the beverage forming composition of the present invention may further comprise an emulsifier to aid dispersion and sinking of the ground coffee. Said emulsifier may consist of any emulsifier known to those skilled in the art, but in preferred embodiments sorbitan monostearate dispersed on modified potato starch has been found to be particularly suitable. Typically, said beverage forming composition may comprise 0.2 to 1.0% by weight of the emulsifier.

Said beverage forming composition may further comprise a flow agent to aid in dispensing of the coffee composition within a beverage dispensing machine. This aids flow within a dispense valve and allows reasonably accurate metering of the coffee during dispense on a timed basis. Thus, it is possible within a vending machine to select a mild, medium or strong coffee drink, depending purely on the period during which the coffee composition is dispensed into a container prior to mixing with de-aerated water. Typical flow agents which can be used are those such as silicone dioxide which is commercially available under the trade mark NEOSYL TS. Said flow agent may be present in an amount from 0 to 2% by weight of the composition, preferably 0.85 to 1%.

Following is a description by way of example only of embodiments of the present invention.

### Example 1

A coffee composition in accordance with the present invention has the following formulation:

| | |
|---|---|
| instant coffee | 64.3 parts |
| dextrose monohydrate | 18.8 parts |
| NEOSYL TS (trade mark) | 2.0 parts |
| coffee beans (ground) | 14.5 parts |
| emulsifier | 0.3 parts |

All the parts given are parts by weight.

The blend of coffee beans is Turkish ground (pulverised), and the grounds having an average particle size of 20µ.

The instant coffee comprises soluble solids of pure coffee and powder form with a particle size such that 10 to 25% by weight is retained on a 500µ mesh sieve, 25 to 35% by weight on a 355µ mesh sieve, 20 to 30% by weight on a 250µ mesh sieve, 15 to 25% by weight on a 125µ mesh sieve, 5 to 10% by weight on 63µ mesh sieve and less than 5% passes through a 63µ mesh sieve.

The composition may be prepared as follows. A quantity of the emulsifier is mixed with the coffee beans which are then ground (Turkish ground) immediately prior to use. All ingredients are weighed out and half of the instant coffee is loaded into a blender. The dextrose monohydrate, NEOSYL TS (trade mark) and ground coffee are then loaded into the blender and finally the remaining half of the instant coffee is added. This is mixed for five minutes, and then the dead space ingredients are removed and added back along the length of the blender and mixing is continued for a further five minutes. The resultant coffee composition is then removed from the blender.

On the addition of de-aerated water having a temperature of 60 to 90°C from water tank assembly of the kind described in GB-A-2234151 to a sample of the coffee composition of the example in a receptacle, it was found that the coffee composition wetted, dispersed, sank and infused. The insoluble, ground coffee particles collect as a mass at the bottom of the receptacle and, after drinking, can be thrown away with the receptacle.

The coffee composition as hereinbefore described may optionally further include a soluble, powder whitener. Said whitener may be a non-dairy creamer, dried milk powder or milk. Preferably, the whitener may consist of a semi-instant (agglomerated) non-dairy creamer, dextrose monohydrate, lactose and maltondextrin. Preferably however the whitener, when required, is dispensed into a receptacle separately from the coffee composition of the present invention, so that a consumer can select either white or black coffee.

## Claims

1. A coffee composition comprising particles of ground coffee beans, which particles have a size distribution as follows:-
| | |
|---|---|
| Less than 16 microns | 50-70% by weight |
| 16-46 microns | 30-50% by weight |
| 46-100 microns | less than 10% by weight |
wherein the total of the particles of ground coffee beans is 100% by weight.

2. A coffee composition as claimed in claim 1, further comprising soluble solids of pure coffee in powder form.

3. A coffee composition as claimed in claim 2, wherein said powder has a particle size such that 10-25% by weight is retained on a 500 micron mesh sieve, 25-30% by weight is retained on a 355 micron mesh sieve, 20-30% by weight is retained on a 250 micron mesh sieve, 15-25% by weight is retained on a 125 micron mesh sieve, 5-10% by weight is retained on a 63 micron mesh sieve, and less than 5% of the powder passes through a 63 micron mesh sieve, wherein the total of the powder particles is 100% by weight.

4. A coffee composition as claimed in any preceding claim, which composition comprises 10-20% parts by weight of ground coffee beans and 50-70 parts instant coffee.

5. A coffee composition as claimed in any preceding claim, further comprising an emulsifier to aid dispersion and sinking of the ground coffee.

6. A coffee composition as claimed in any preceding claim, further comprising a flow agent to aid dispensing of the coffee composition from a beverage dispensing machine.

7. A coffee composition as claimed in any preceding claim, further comprising a soluble, powdered whitener.

8. A coffee composition as claimed in claim 1 and described in Example 1 above.
